# EUROPEAN PATENT SPECIFICATION

(11) **EP 4 567 530 B1**
(45) Date of publication and mention of the grant of the patent: **02.12.2026**
(21) Application number: 23872836.4
(22) Date of filing: 05.09.2023
(51) Int. Cl.: A44C 5/14, G04G 17/08, G04G 21/02, G06F 1/16, G04B 37/14

(54) **ELECTRONIC APPARATUS COMPRISING FRAME DETACHABLY COUPLED TO HOUSING**
ELEKTRONISCHES GERÄT MIT LÖSBAR AN EINEM GEHÄUSE BEFESTIGTEM RAHMEN
APPAREIL ÉLECTRONIQUE COMPRENANT UN CADRE ACCOUPLÉ DE MANIÈRE AMOVIBLE À UN BOÎTIER

(30) Priority: 27.09.2022 KR 20220122864; 25.10.2022 KR 20220138761
(43) Date of publication of application: 11.06.2025
(73) Proprietor: Samsung Electronics Co., Ltd., Suwon-si, Gyeonggi-do 16677 (KR)
(72) Inventor: KIM, Donghyun, Suwon-si Gyeonggi-do 16677 (KR)
(74) Representative: Gulde & Partner
(86) International application number: PCT/KR2023/013288
(87) International publication number: WO 2024/071716

(56) References cited:
- EP-A1- 2 172 816
- CN-U- 210 181 405
- CN-U- 210 181 405
- JP-A- 2006 314 347
- JP-A- 2018 536 523
- JP-U- H0 716 191
- JP-U- H0 716 191
- KR-A- 20200 146 016
- KR-A- 20200 146 016
- US-A1- 2002 071 346

## Description

### [Technical Field]

The present disclosure relates to an electronic device comprising a frame detachably coupled to a housing.

### [Background Art]

As interest in an electronic device increases, the electronic device may have various forms to meet a need of a user. For example, the electronic device may have a form of a watch worn on a portion of a body of the user. In addition to various electronic functions, the electronic device may provide an aesthetic experience to the user through an exterior.

KR20200146016A discloses an electronic device comprising a housing including a first surface, a second surface opposite to the first surface and spaced apart from the first surface in a first direction, a side surface connecting the first surface and the second surface, and comprising a first coupling portion; a first frame including a first hole and a first fastening portion having a shape corresponding to the first coupling portion, the first frame detachably coupled to the side surface; and a strap including a first pin that is movable in a second direction perpendicular to the first direction and is accommodated in the first hole, the strap detachably coupled to the first frame, and wherein the first coupling portion is coupled to the first fastening portion such that a coupling between the first frame and the housing is maintained.

### [Disclosure]

### [Technical Solution]

According to the present invention, an electronic device comprises a housing including a first surface, a second surface opposite to the first surface and spaced apart from the first surface in a first direction, and a side surface connecting the first surface and the second surface, and comprising a first coupling portion; a first frame including a first through hole and a first fastening portion having a shape corresponding to the first coupling portion, the first frame detachably coupled to the side surface; and a strap including a first receiving groove, and a first pin that is movable in a second direction perpendicular to the first direction with respect to the first receiving groove and is accommodated in the first through hole, the strap detachably coupled to the first frame, and where the first coupling portion is coupled to the first fastening portion such that a coupling between the first frame and the housing is maintained, and where the first receiving groove surrounds an end of the first frame such that a coupling between the first frame and the strap is maintained.

Further embodiments are defined in the dependent claims.

### [Description of the Drawings]

FIG. 1 is a block diagram of an electronic device within a network environment according to various embodiments.
FIG. 2A is a perspective view of an exemplary electronic device according to an embodiment.
FIG. 2B is a perspective view of an exemplary electronic device according to an embodiment.
FIG. 3 is an exploded perspective view of an exemplary electronic device according to an embodiment.
FIG. 4A is a top plan view of an exemplary electronic device according to an embodiment.
FIG. 4B is an exploded perspective view of an exemplary electronic device according to an embodiment.
FIG. 5A illustrates a state in which a frame and a strap of an exemplary electronic device are separated according to an embodiment.
FIG. 5B illustrates a state in which a frame and a strap of an exemplary electronic device are coupled according to an embodiment.
FIG. 6 is a perspective view illustrating a frame and a housing of an exemplary electronic device according to an embodiment.
FIG. 7 is a perspective view illustrating a frame and a housing of an exemplary electronic device according to an embodiment.

### [Mode for Invention]

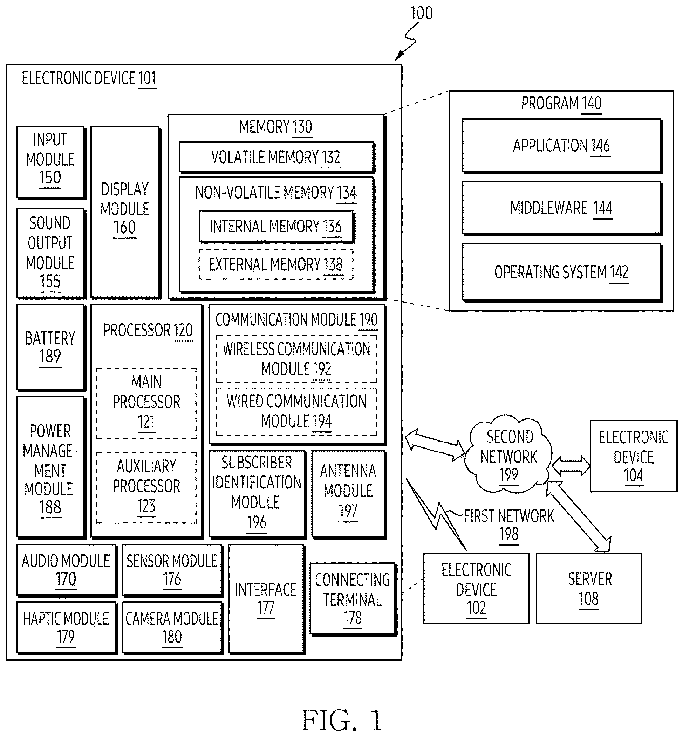

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

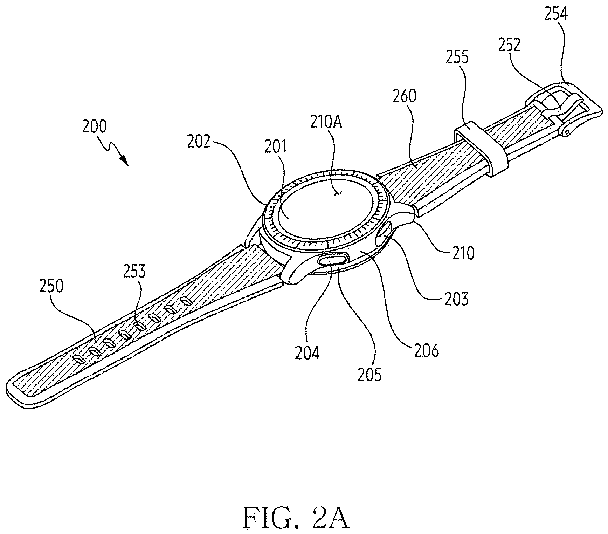

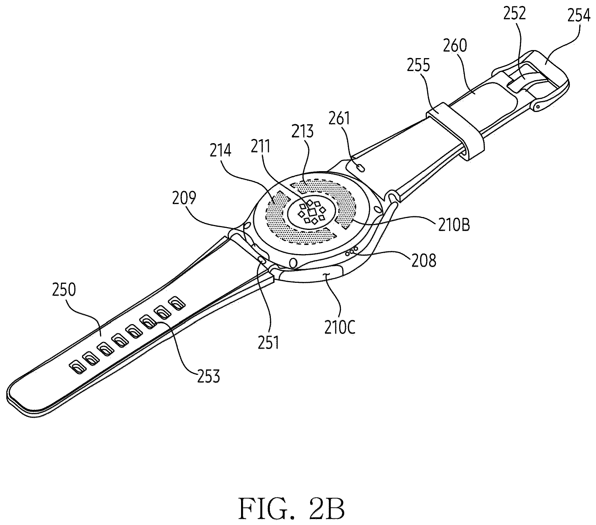

FIG. 2A and FIG. 2B are a perspective view of an exemplary electronic device according to an embodiment.

Referring to FIG. 2A and FIG. 2B, an electronic device 200 (e.g., the electronic device 101 of FIG. 1) according to an embodiment may include a housing 210 that includes a first surface (or a front surface) 210A, a second surface (or a rear surface) 210B, and a side surface 210C surrounding a space between at least a portion of the first surface 210A and the second surface 210B, and attachment members 250 and 260 connected to at least a portion of the housing 210 and configured to detachably attach the electronic device 200 to a portion (e.g., a wrist or an ankle) of a body of a user. In an embodiment (not illustrated), a housing may also refer to a structure forming a portion of the first surface 210A, the second surface 210B, and the side surface 210C of FIG. 2A. According to an embodiment, the first surface 210A may be formed by a front plate 201 (e.g., a glass plate or a polymer plate including various coating layers) that is at least partially substantially transparent. The second surface 210B may be implemented by a rear plate 207 that is substantially opaque. The rear plate 207 may be implemented, for example, by coated or colored glass, ceramic, polymer, metal (e.g., aluminum, stainless steel (STS), or magnesium), or a combination of at least two of the materials. The side surface 210C may be coupled to the front plate 201 and the rear plate 207, and may be formed by a side bezel structure (or a "side member") 206 including metal and/or polymer. In some embodiment, the rear plate 207 and the side bezel structure 206 may be integrally formed and include the same material (e.g., a metallic material such as aluminum). The attachment members 250 and 260 may be formed of various materials and forms. The attachment members 250 and 260 may be formed by woven fabric, leather, rubber, urethane, metal, ceramic, or a combination of at least two of the materials.

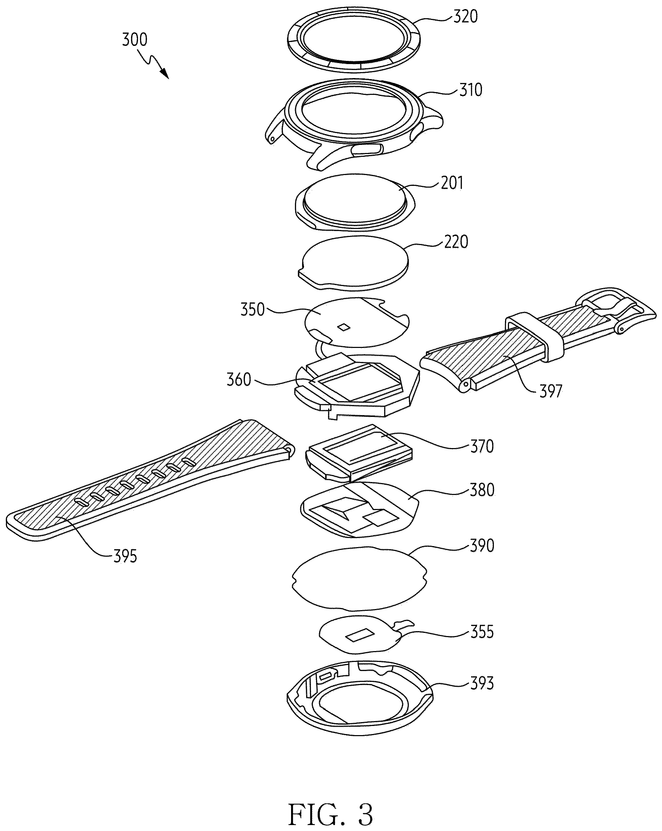

According to an embodiment, the electronic device 200 may include at least one of a display 220 (refer to FIG. 3), audio modules 205 and 208, a sensor module 211, key input devices 202, 203, and 204, and a connector hole 209. In some embodiment, the electronic device 200 may omit at least one of components (e.g., the key input devices 202, 203, and 204, the connector hole 209, or the sensor module 211) or may additionally include another component.

For example, the display 220 may be exposed through a significant portion of the front plate 201. A form of the display 220 may be a form corresponding to a form of the front plate 201, and may be various forms (e.g., a circle, an ellipse, or a polygon (e.g., a quadrangle)). The display 220 may be coupled to or adjacent to touch sensing circuitry, a pressure sensor capable of measuring an intensity (pressure) of a touch, and/or a fingerprint sensor.

The audio modules 205 and 208 may include a microphone hole 205 and a speaker hole 208. A microphone for obtaining external sound may be disposed inside the microphone hole 205, and in some embodiment, a plurality of microphones may be disposed to detect a direction of sound. The speaker hole 208 may be used as an external speaker and a call receiver. In some embodiment, the speaker hole 208 and the microphone hole 205 may be implemented as one hole, or a speaker may be included without the speaker hole 208 (e.g., a piezo speaker).

The sensor module 211 may generate an electrical signal or a data value corresponding to an operating state inside or an environmental state outside the electronic device 200. The sensor module 211 may include, for example, a biometric sensor module 211 (e.g., an HRM sensor) disposed on the second surface 210B of the housing 210. The electronic device 200 may further include at least one of a sensor module, which is not illustrated, for example, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, or an illuminance sensor.

The sensor module 211 may include electrode regions 213 and 214 forming a portion of an external surface of the electronic device 200 and biometric signal detection circuitry (not illustrated) electrically connected to the electrode regions 213 and 214. For example, the electrode regions 213 and 214 may include a first electrode region 213 and a second electrode region 214, disposed on the second surface 210B of the housing 210. The sensor module 211 may be configured such that the electrode regions 213 and 214 obtain an electrical signal from a portion of the body of the user, and the biometric signal detection circuitry detects biometric information of the user based on the electrical signal.

The key input devices 202, 203, and 204 may include a wheel key 202 disposed on the first surface 210A of the housing 210 and rotatable in at least one direction, and/or side key buttons 203 and 204 disposed on the side surface 210C of the housing 210. A wheel key may have a form corresponding to a form of the front plate 201. In an embodiment, the electronic device 200 may not include a portion or all of the key input devices 202, 203, and 204 mentioned above, and the key input devices 202, 203, and 204 that are not included may be implemented in another form such as a soft key and the like on the display 220. The connector hole 209 may accommodate a connector (e.g., a USB connector) for transmitting and receiving power and/or data with an external electronic device, and may include another connector hole (not illustrated) that can accommodate a connector for transmitting and receiving an audio signal with the external electronic device. The electronic device 200 may further include, for example, a connector cover (not illustrated) covering at least a portion of the connector hole 209 and blocking an inflow of an external foreign substance into the connector hole.

The attachment members 250 and 260 may be detachably attached to at least a partial area of the housing 210 by using locking members 251 and 261. The attachment members 250 and 260 may include one or more of a fixing member 252, a fixing member fastening hole 253, a band guide member 254, and a band fixing ring 255.

The fixing member 252 may be configured to fix the housing 210 and the attachment members 250 and 260 to the portion (e.g., the wrist or the ankle) of the body of the user. The fixing member fastening hole 253 may fix the housing 210 and the attachment members 250 and 260 to the portion of the body of the user corresponding to the fixing member 252. The band guide member 254 may be configured to limit a movement range of the fixing member 252 when the fixing member 252 is fastened to the fixing member fastening hole 253, such that the attachment members 250 and 260 may be in close contact with and attached to the portion of the body of the user. The band fixing ring 255 may limit a movement range of the attachment members 250 and 260 in a state in which the fixing member 252 and the fixing member fastening hole 253 are fastened.

FIG. 3 is an exploded perspective view of an exemplary electronic device according to an embodiment.

Referring to FIG. 3, an electronic device 300 (e.g., the electronic device 101 of FIG. 1, the electronic device 200 of FIG. 2A and/or FIG. 2B) may include a side bezel structure 310, a wheel key 320, a front plate 201, a display 220, a first antenna 350, a second antenna 355, a support member 360 (e.g., a bracket), a battery 370, a printed circuit board 380, a sealing member 390, a rear plate 393, and attachment members 395 and 397. At least one of components of the electronic device 300 may be the same as or similar to at least one of the components of the electronic device 200 of FIG. 1, FIG. 2A and/or FIG. 2B, and a redundant description will be omitted below. The support member 360 may be disposed inside the electronic device 300 to be connected to the side bezel structure 310, or may be integrally formed with the side bezel structure 310. The support member 360 may be formed of, for example, a metal material and/or a non-metal (e.g., polymer) material. The display 220 may be coupled to a surface of the support member 360, and the printed circuit board 380 may be coupled to another surface of the support member 360. A processor, memory, and/or an interface may be mounted on the printed circuit board 380. The processor may include, for example, one or more of a central processing unit, an application processor, a graphic processing unit (GPU), an application processor, a sensor processor, or a communication processor.

The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 300 to an external electronic device, for example, and may include a USB connector, an SD card/MMC connector, or an audio connector.

The battery 370 is a device for supplying power to at least one component of the electronic device 300, and may include, for example, a non-rechargeable primary battery, a rechargeable secondary battery, or a fuel cell. At least a portion of the battery 370 may be disposed on, for example, substantially the same plane as the printed circuit board 380. The battery 370 may be integrally disposed inside the electronic device 200 or may be detachably disposed from the electronic device 200.

The first antenna 350 may be disposed between the display 220 and the support member 360. The first antenna 350 may include, for example, a near field communication (NFC) antenna, a wireless charging antenna, and/or a magnetic secure transmission (MST) antenna. For example, the first antenna 350 may perform short-range communication with an external device, wirelessly transmit and receive power required for charging, and transmit an electromagnetic signal including a short-range communication signal or payment data. In an embodiment, an antenna structure may be formed by at least a portion of the side bezel structure 310 and/or a portion of the support member 360, or a combination thereof. The second antenna 355 may be disposed between the printed circuit board 380 and the rear plate 393. The second antenna 355 may include, for example, the near field communication (NFC) antenna, the wireless charging antenna, and/or the magnetic secure transmission (MST) antenna. For example, the second antenna 355 may perform the short-range communication with the external device, wirelessly transmit and receive the power required for charging, and transmit the electromagnetic signal including the short-range communication signal or the payment data. In an embodiment, an antenna structure may be formed by the side bezel structure 310 and/or the rear plate 393, or a combination thereof.

The sealing member 390 may be positioned between the side bezel structure 310 and the rear plate 393. The sealing member 390 may be configured to block moisture and a foreign substance flowing into a space surrounded by the side bezel structure 310 and the rear plate 393 from the outside.

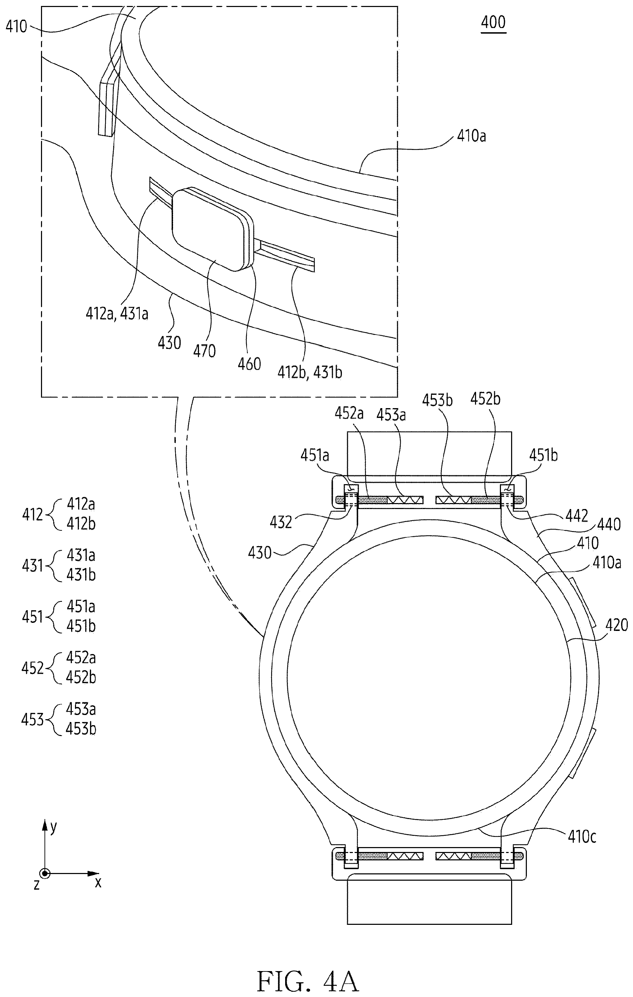

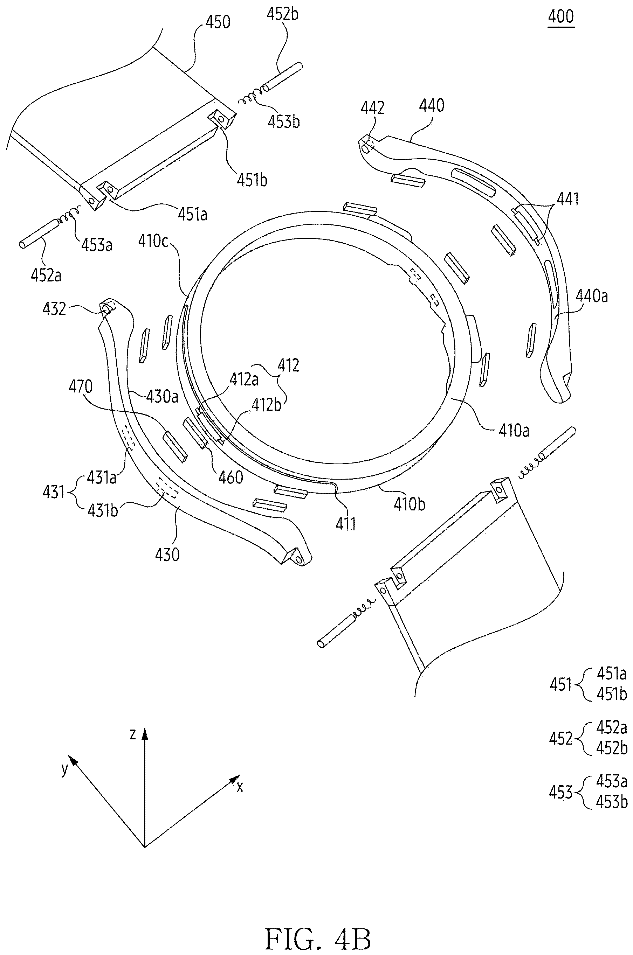

FIG. 4A is a top plan view of an exemplary electronic device according to an embodiment, and FIG. 4B is an exploded perspective view of an exemplary electronic device according to an embodiment.

Referring to FIG. 4A and FIG. 4B, an electronic device 400 according to an embodiment may include a housing 410 (e.g., the housing 210 of FIG. 2A and FIG. 2B), a display 420 (e.g., the display 220 of FIG. 3), a first frame 430, a second frame 440, a strap 450 (e.g., the attachment members 250 and 260 of FIG. 2A and FIG. 2B), at least one first magnet 460 and/or at least one second magnet 470. According to an embodiment, the electronic device 400 may be worn by a user. For example, the electronic device 400 may be worn on a wrist of the user. The electronic device 400 may be referred to as a wearable device in terms of being worn by the user.

According to an embodiment, the housing 410 may define at least a portion of an outer surface of the electronic device 400. The housing 410 may provide a space in which parts in the electronic device 400 may be disposed. The housing 410 may support components of the electronic device 400. For example, a first surface 410a of the housing 410 may support the display 420. The display 420 may be disposed on the first surface 410a of the housing 410. For example, the first surface 410a may support an edge of the display 420. According to an embodiment, a second surface 410b of the housing 410 may be opposite to the first surface 410a. For example, a direction (e.g., a -z direction) in which the second surface 410b faces may be opposite to a direction (e.g., a +z direction) in which the first surface 410a faces. According to an embodiment, the second surface 410b may be spaced apart from the first surface 410a. For example, the second surface 410b may be spaced apart from the first surface 410a in a first direction (e.g., the -z direction). For example, the second surface 410b may be substantially parallel to the first surface 410a. A side surface 410c of the housing 410 may connect the first surface 410a and the second surface 410b. For example, the side surface 410c may extend between the first surface 410a and the second surface 410b spaced apart from each other. According to an embodiment, the housing 410 may have a shape that has a curvature and is bent. For example, the shapes of the first surface 410a and the second surface 410b may be substantially circular. In case that the first surface 410a and the second surface 410b are circular, the side surface 410c connecting the first surface 410a and the second surface 410b may have a curvature and be bent. According to an embodiment, the side surface 410c may be substantially perpendicular to the first surface 410a and the second surface 410b. For example, a direction in which the side surface 410c faces may be substantially perpendicular to the direction in which the first surface 410a faces and the direction in which the second surface 410b faces.

According to an embodiment, the housing 410 may include at least one fastening groove 411. The at least one fastening groove 411 may be disposed on the side surface 410c of the housing 410. For example, the at least one fastening groove 411 may be formed as a portion of the side surface 410c of the housing 410 is recessed inwardly. According to an embodiment, the at least one fastening groove 411 may accommodate the first frame 430 and the second frame 440. For example, the at least one fastening groove 411 may have a shape corresponding to the first frame 430. For example, the at least one fastening groove 411 may have a shape corresponding to the second frame 440. According to an embodiment, the at least one fastening groove 411 may include a plurality of fastening grooves spaced apart from each other on the side surface 410c of the housing 410, but is not limited thereto. For example, each of the plurality of fastening grooves may face the first frame 430 and the second frame 440.

According to an embodiment, the housing 410 may include a first coupling portion 412 for coupling the first frame 430 and the housing 410. The first coupling portion 412 may be disposed on the side surface 410c of the housing 410. For example, the first coupling portion 412 may have a shape of a groove formed by recessing a portion of the side surface 410c of the housing 410, but is not limited thereto. For example, the first coupling portion 412 may have a shape of a protrusion protruding from the side surface 410c of the housing 410. According to an embodiment, the first coupling portion 412 may include a first groove 412a and/or a second groove 412b. The first groove 412a may be disposed on the side surface 410c of the housing 410. For example, the first groove 412a may have a shape extending along the side surface 410c of the housing 410. The second groove 412b may be spaced apart from the first groove 412a. For example, the second groove 412b may be disconnected from the first groove 412a.

According to an embodiment, the housing 410 may include a second coupling portion 413 for coupling the second frame 440 and the housing 410. The second coupling portion 413 may be disposed on the side surface 410c of the housing 410. For example, the second coupling portion 413 may have the shape of the groove formed by recessing the portion of the side surface 410c of the housing 410, but is not limited thereto. For example, the second coupling portion 413 may have the shape of the protrusion protruding from the side surface 410c of the housing 410.

The display 420 may be configured to provide visual information to the user of the electronic device 400. For example, the display 420 may emit light in the direction (e.g., the +z direction) in which the first surface 410a faces to provide visual information to the user. According to an embodiment, the display 420 may have a substantially circular shape. For example, a shape of the display 420 may substantially correspond to a shape of the housing 410. According to an embodiment, the display 420 may be coupled to the housing 410. For example, the edge of the display 420 may be surrounded by the housing 410.

The first frame 430 may define another portion of the outer surface of the electronic device 400. For example, the first frame 430 may define a portion of a side surface of the electronic device 400. According to an embodiment, the first frame 430 may be detachably coupled to the housing 410. The first frame 430 may be detachably coupled to the side surface 410c of the housing 410. For example, an inner surface 430a of the first frame 430 may face the side surface 410c of the housing 410 when the housing 410 and the first frame 430 are coupled. For example, the first frame 430 may be in contact with a portion of the side surface 410c of the housing 410, in a state of being coupled to the housing 410. As the first frame 430 is detachably coupled to the housing 410, the user may variously change an exterior of the electronic device 400 through replacement of the first frame 430. For example, the user may change a color of the exterior of the electronic device 400 through the replacement of the first frame 430. For example, the user may change a shape of the exterior of the electronic device 400 through the replacement of the first frame 430. According to an embodiment, at least a portion of the first frame 430 may have a shape corresponding to the side surface 410c of the housing 410. For example, the at least a portion of the first frame 430 may have a curvature and be bent. The first frame 430 may surround the portion of the side surface 410c of the housing 410 in the state of being coupled to the housing 410. According to an embodiment, the first frame 430 may include a first fastening portion 431, and/or a first through hole 432.

The first fastening portion 431 may couple the first frame 430 and the housing 410. According to an embodiment, the first fastening portion 431 may be coupled to the first coupling portion 412 of the housing 410. For example, the first fastening portion 431 may be coupled to the first coupling portion 412 such that the coupling between the first frame 430 and the housing 410 is maintained. For example, when the housing 410 and the first frame 430 are coupled, the first fastening portion 431 may be in contact with the first coupling portion 412. According to an embodiment, the first fastening portion 431 may have a shape corresponding to the first coupling portion 412. For example, when the first coupling portion 412 has a groove shape, the first fastening portion 431 may have a protrusion shape. For example, when the first coupling portion 412 has a protrusion shape, the first fastening portion 431 may have a groove shape. According to an embodiment, the first fastening portion 431 may be disposed on the inner surface 430a of the first frame 430 facing the side surface 410c of the housing 410. For example, the first fastening portion 431 may include at least one protrusion 431a and 431b protruding from the side surface 410c of the housing 410. For example, the at least one protrusion 431a and 431b may include the first protrusion 431a and/or the second protrusion 431b spaced apart from each other. The first protrusion 431a may be accommodated in the first groove 412a when the housing 410 and the first frame 430 are coupled. The second protrusion 431b may be accommodated in the second groove 412b when the housing 410 and the first frame 430 are coupled. According to an embodiment, the first coupling portion 412 and the first fastening portion 431 may limit movement of the first frame 430 when the first frame 430 is coupled to the housing 410. For example, when the first frame 430 is coupled to the housing 410, the first coupling portion 412 may be coupled to the first fastening portion 431 to limit movement in a direction (e.g., the -z direction and/or the +z direction) parallel to the first direction (e.g., the -z direction) of the first frame 430. Movement being limited may include a state in which a component is fixed to another component, and a movable state while maintaining a state in which the component is coupled to the other component, and the same expression may be used hereinafter unless otherwise stated. For example, in a state in which the movement is limited by the first coupling portion 412 and the first fastening portion 431, the first frame 430 may be fixed to the housing 410. In the state in which the movement is limited by the first coupling portion 412 and the first fastening portion 431, the first frame 430 may be movable with respect to the housing 410 while maintaining the state of being coupled to the housing 410. As the movement of the first frame 430 with respect to the housing 410 is limited by the first coupling portion 412 and the first coupling portion 431, the electronic device 400 according to an embodiment may provide a structure in which the housing 410 and the first frame 430 may be easily maintained.

The first through hole 432 may couple the first frame 430 and the strap 450. According to an embodiment, the first through hole 432 may penetrate the first frame 430. For example, the first through hole 432 may penetrate an end of the first frame 430. The end of the first frame 430 may be surrounded by the strap 450 when the strap 450 and the first frame 430 are coupled.

The second frame 440 may define another portion of the outer surface of the electronic device 400. For example, the second frame 440 may define at least a portion of the side surface of the electronic device 400. According to an embodiment, the second frame 440 may be detachably coupled to the housing 410. The second frame 440 may be detachably coupled to the side surface 410c of the housing 410. For example, an inner surface 440a of the second frame 440 may face the side surface 410c of the housing 410 when the housing 410 and the second frame 440 are coupled. For example, the second frame 440 may be in contact with a portion of the side surface 410c of the housing 410 in the state of being coupled to the housing 410. As the second frame 440 is detachably coupled to the housing 410, the user may variously change the exterior of the electronic device 400 through replacement of the second frame 440. According to an embodiment, at least a portion of the second frame 440 may have a shape corresponding to the side surface 410c of the housing 410. For example, at least a portion of the second frame 440 may have a curvature and be bent. The second frame 440 may surround a portion of the side surface 410c of the housing 410 in the state of being coupled to the housing 410. According to an embodiment, the second frame 440 may be spaced apart from the first frame 430. For example, the second frame 440 may be spaced apart from the first frame 430 along a second direction (e.g., a +x direction) perpendicular to the first direction (e.g., the -z direction). For example, the first frame 430 may surround a portion of the side surface 410c of the housing 410, and the second frame 440 may surround another portion of the side surface 410c of the housing 410. As the first frame 430 and the second frame 440 are spaced apart from each other, a region of the side surface 410c of the housing 410 not surrounded by the first frame 430 and the second frame 440 may be opened to the outside of the electronic device 400. According to an embodiment, the second frame 440 may include a second fastening portion 441 and/or a second through hole 442.

The second fastening portion 441 may couple the second frame 440 and the housing 410. According to an embodiment, the second fastening portion 441 may be coupled to the second coupling portion 413 of the housing 410. For example, when the housing 410 and the second frame 440 are coupled, the second fastening portion 441 may be in contact with the second coupling portion 413. According to an embodiment, the second fastening portion 441 may have a shape corresponding to the second coupling portion 413. For example, when the second coupling portion 413 has the groove shape, the second fastening portion 441 may have the protrusion shape. For example, when the second coupling portion 413 has the protrusion shape, the second fastening portion 441 may have the groove shape. According to an embodiment, the second fastening portion 441 may be disposed on the inner surface 440a of the second frame 440 facing the side surface 410c of the housing 410. According to an embodiment, the second coupling portion 413 and the second fastening portion 441 may limit movement of the second frame 440 when the second frame 440 is coupled to the housing 410. For example, when the second frame 440 is coupled to the housing 410, the second coupling portion 413 may be coupled to the second fastening portion 441 to limit the movement in a direction (e.g., the -z direction and/or the +z direction) parallel to the first direction (e.g., the -z direction) of the second frame 440. For example, in a state in which the movement is limited by the second coupling portion 413 and the second fastening portion 441, the second frame 440 may be fixed to the housing 410. In the state in which the movement is limited by the second coupling portion 413 and the second fastening portion 441, the second frame 440 may be movable with respect to the housing 410 while maintaining the state of being coupled to the housing 410.

The second through hole 442 may couple the second frame 440 and the strap 450. According to an embodiment, the second through hole 442 may penetrate the second frame 440. For example, the second through hole 442 may penetrate an end of the second frame 440. The end of the second frame 440 may be surrounded by the strap 450 when the strap 450 and the second frame 440 are coupled.

When the electronic device 400 is worn by the user, the strap 450 may be in contact with a portion of a body of the user. The strap 450 may support the electronic device 400 when the electronic device 400 is worn by the user. According to an embodiment, the strap 450 may be detachably coupled to the first frame 430. The strap 450 may be detachably coupled to the second frame 440. According to an embodiment, the strap 450 may include at least one receiving groove 451, at least one pin 452, and/or at least one elastic member 453.

The at least one receiving groove 451 may accommodate a portion of a plurality of frames 430 and 440 when the strap 450 and the plurality of frames 430 and 440 are coupled. According to an embodiment, the at least one receiving groove 451 may include the first receiving groove 451a and/or the second receiving groove 451b. When the strap 450 and the first frame 430 are coupled, the first receiving groove 451a may accommodate an end of the first frame 430 in which the first through hole 432 is disposed. When the strap 450 and the first frame 430 are coupled, the first receiving groove 451a may surround the end of the first frame 430. The first receiving groove 451a may surround the end of the first frame 430 such that the coupling between the strap 450 and the first frame 430 is maintained. According to an embodiment, the first receiving groove 451a may have a shape corresponding to a shape of the end of the first frame 430. For example, the first receiving groove 451a may be formed by recessing a portion of the strap 450 inwardly, to have a shape corresponding to a shape of the first frame 430. When the strap 450 and the second frame 440 are coupled, the second receiving groove 451b may accommodate an end of the second frame 440 in which the second through hole 442 is disposed. The second receiving groove 451b may surround the end of the second frame 440 when the strap 450 and the second frame 440 are coupled. According to an embodiment, the second receiving groove 451b may be spaced apart from the first receiving groove 451a. For example, the second receiving groove 451b may be spaced apart from the first receiving groove 451a in the second direction (e.g., the +x direction). According to an embodiment, the second receiving groove 451b may have a shape corresponding to a shape of the second frame 440. The second receiving groove 451b may be formed by recessing a portion of the strap 450 inwardly, to have the shape corresponding to the shape of the second frame 440.

According to an embodiment, the at least one receiving groove 451 may limit movement of the plurality of frames 430 and 440 in a direction (e.g., the +x direction and/or a -x direction) parallel to the second direction (e.g., the +x direction) in a state in which the strap 450 and the plurality of frames 430 and 440 are coupled. For example, the first receiving groove 451a may limit the movement in the direction parallel to the second direction of the first frame 430 in the state in which the strap 450 and the first frame 430 are coupled. For example, the movement of the first frame 430 in the direction parallel to the second direction may be limited by a contact between the first frame 430 and an inner surface of the strap 450 surrounding the first receiving groove 451a. For example, the second receiving groove 451b may limit movement in the direction parallel to the second direction of the second frame 440 in the state in which the strap 450 and the second frame 440 are coupled. For example, the movement of the second frame 440 in the direction parallel to the second direction may be limited by a contact between the second frame 440 and the inner surface of the strap 450 surrounding the second receiving groove 451a. The electronic device 400 according to an embodiment may provide a structure capable of easily maintaining the coupling of the strap 450 and the plurality of frames 430 and 440 by the at least one receiving groove 451 limiting the movement in the direction parallel to the second direction of the plurality of frames 430 and 440.

The at least one pin 452 may couple the strap 450 and the plurality of frames 430 and 440. According to an embodiment, the at least one pin 452 may include a first pin 452a for coupling the strap 450 to the first frame 430, and a second pin 452b for coupling the strap 450 to the second frame 440.

The first pin 452a may be movable with respect to the first receiving groove 451a. For example, the first pin 452a may be movable in the second direction (e.g., the +x direction) perpendicular to the first direction (e.g., the -z direction) with respect to the first receiving groove 451a. For example, the first pin 452a may be movable in a third direction (e.g., the -x direction) opposite to the second direction (e.g., the +x direction) with respect to the first receiving groove 451a. According to an embodiment, the first pin 452a may have a linearly extended shape. For example, the first pin 452a may have a shape extending in a direction parallel to the second direction (e.g., the +x direction). According to an embodiment, when the strap 450 and the first frame 430 are coupled, the first pin 452a may be accommodated in the first through hole 432. For example, when the strap 450 and the first frame 430 are coupled, the first pin 452a may be inserted into the first through hole 432. As the first pin 452a of the strap 450 penetrates the first through hole 432 of the first frame 430, the strap 450 and the first frame 430 may be coupled to each other. According to an embodiment, the strap 450 may be rotatable with respect to the first frame 430 in a state of being coupled to the first frame 430 through the first pin 452a. For example, the strap 450 may be rotatable with respect to the first frame 430 based on the first pin 452a in the state of being coupled to the first frame 430.

The second pin 452b may be movable with respect to the second receiving groove 451b. For example, the second pin 452b may be movable in the second direction (e.g., the +x direction) perpendicular to the first direction (e.g., the -z direction) with respect to the second receiving groove 451b. For example, the second pin 452b may be movable in the third direction (e.g., the - x direction) opposite to the second direction (e.g., the +x direction) with respect to the second receiving groove 451b. According to an embodiment, the second fin 452b may have the linearly extended shape. For example, the second pin 452b may have the shape extending in the direction parallel to the second direction (e.g., the +x direction). According to an embodiment, when the strap 450 and the second frame 440 are coupled, the second pin 452b may be accommodated in the second through hole 442. For example, when the strap 450 and the second frame 440 are coupled, the second pin 452b may be inserted into the second through hole 442. As the second pin 452b of the strap 450 penetrates the second through hole 442 of the second frame 440, the strap 450 and the second frame 450 may be coupled. According to an embodiment, the strap 450 may be rotatable with respect to the second frame 440 in a state of being coupled to the second frame 440 through the second pin 452b. For example, the strap 450 may be rotatable with respect to the second frame 440 based on the second pin 452b in the state of being coupled to the second frame 440.

The at least one elastic member 453 may restore a position of the at least one fin 452. For example, as the at least one elastic member 453 is deformable by an external force, the at least one elastic member 453 may provide an elastic force the at least one pin 452. According to an embodiment, the at least one elastic member 453 may include a first elastic member 453a and/or a second elastic member 453b. The first elastic member 453a may provide the elastic force to the first fin 452a. For example, the first elastic member 453a may be compressed by movement of the first pin 452a in the second direction (e.g., the +x direction). The first elastic member 453a compressed by the first pin 452a may press the first pin 452a in the third direction (e.g., the -x direction) opposite to the second direction. When the first fin 452a moves in the third direction, the first elastic member 453a may be extended. The second elastic member 453b may provide the elastic force to the second fin 452b. For example, the second elastic member 453b may be compressed by movement of the second pin 452b in the third direction. The second elastic member 453b compressed by the movement of the second fin 452b may press the second fin 452b in the second direction opposite to the third direction. When the second fin 452b moves in the second direction, the second elastic member 453b may be extended.

The at least one first magnet 460 may couple the housing 410 and the first frame 430. For example, the at least one first magnet 460 may couple the housing 410 and the first frame 430 through an interaction with the at least one second magnet 470. For example, the at least one first magnet 460 may include a permanent magnet, but is not limited thereto. According to an embodiment, the at least one first magnet 460 may be coupled to the housing 410. For example, the at least one first magnet 460 may be disposed on the side surface 410c of the housing 410. For example, the at least one first magnet 460 may protrude from the side surface 410c of the housing 410. According to an embodiment, the at least one first magnet 460 may be disposed between the first groove 412a and the second groove 412b of the first coupling portion 412. For example, the at least one first magnet 460 may be in contact with a portion of the first groove 412a and a portion of the second groove 412b of the first coupling portion 412, but is not limited thereto. According to an embodiment, the at least one first magnet 460 may include a plurality of first magnets spaced apart from each other. For example, the plurality of first magnets may be spaced apart from each other along the side surface 410c of the housing 410.

The at least one second magnet 470 may couple the housing 410 and the first frame 430. For example, the at least one second magnet 470 may couple the housing 410 and the first frame 430 through the interaction with the at least one first magnet 460. For example, the at least one second magnet 470 may include the permanent magnet, but is not limited thereto. According to an embodiment, the at least one second magnet 470 may be coupled to the first frame 430. For example, the at least one second magnet 470 may be disposed on the inner surface 430a of the first frame 430 facing the side surface 410c of the housing 410. According to an embodiment, when the first frame 430 and the housing 410 are coupled, the at least one second magnet 470 may face the at least one first magnet 460. For example, in a state in which the first frame 430 and the housing 410 are coupled, the at least one second magnet 470 may be in contact with the at least one first magnet 460. According to an embodiment, the at least one second magnet 470 may include a plurality of second magnets spaced apart from each other. For example, when the housing 410 and the first frame 430 are coupled, each of the plurality of second magnets may face each of the plurality of first magnets. For example, in the state in which the first frame 430 and the housing 410 are coupled, each of the plurality of second magnets may be in contact with each of the plurality of first magnets.

As described above, the electronic device 400 according to an embodiment may provide a structure capable of reducing a separation of the first frame 430 and the housing 410 by the first coupling portion 412 and the first fastening portion 431 that limits the movement of the first frame 430 in the direction (e.g., the -z direction or the +z direction) parallel to the first direction (e.g., the -z direction). The electronic device 400 according to an embodiment may provide a structure capable of reducing a separation between the first frame 430 and the strap 450 by the first receiving groove 451a of the strap 450 that limits the movement of the first frame 430 in the direction (e.g., the +x direction or the -x direction) parallel to the second direction (e.g., the +x direction).

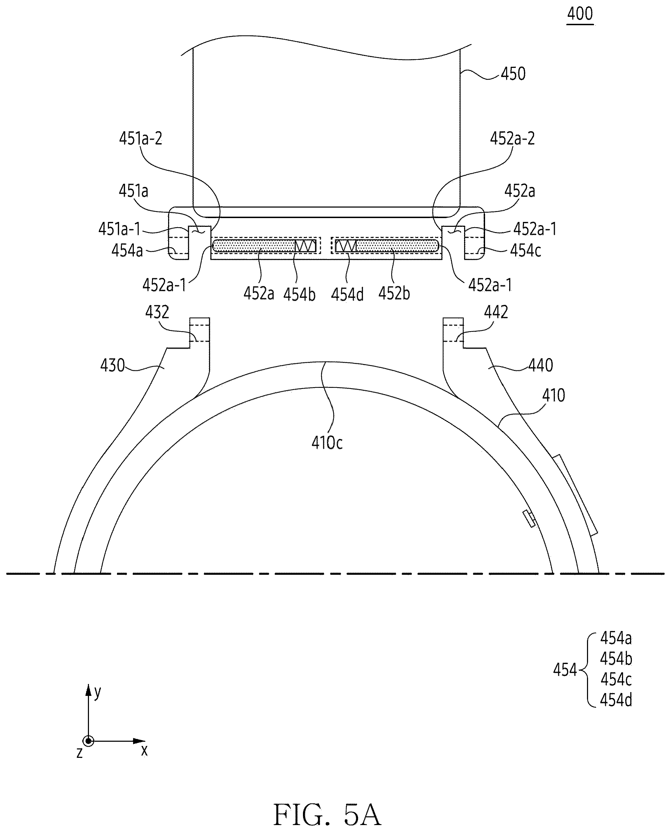

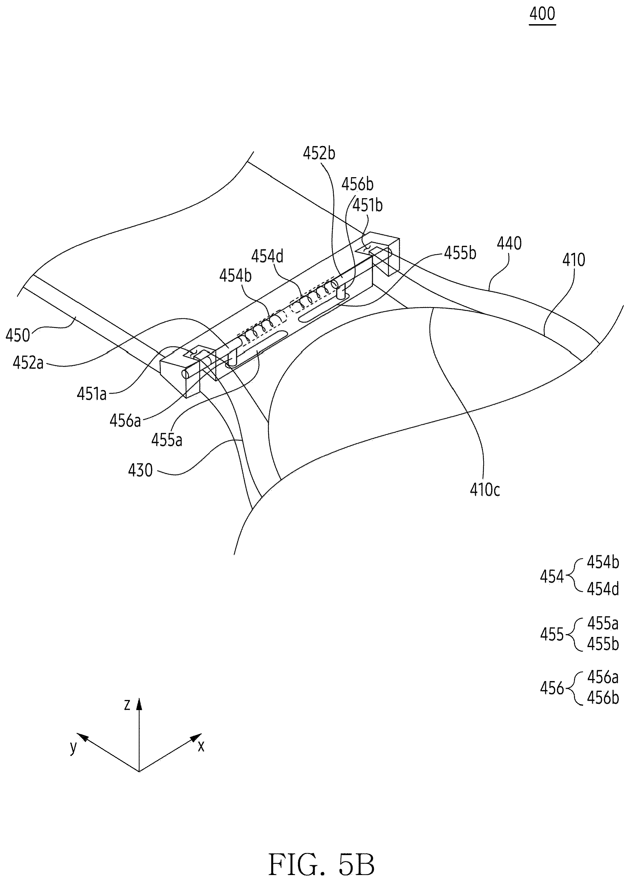

FIG. 5A illustrates a state in which a frame and a strap of an exemplary electronic device are separated according to an embodiment, and FIG. 5B illustrates a state in which a frame and a strap of an exemplary electronic device are coupled according to an embodiment.

Referring to FIG. 5A and FIG. 5B, a strap 450 according to an embodiment may include at least one pin hole 454. The at least one pin hole 454 may provide a moving space of at least one pin 452. The at least one pin hole 454 may have a shape of an empty space disposed inside the strap 450. According to an embodiment, the at least one pin hole 454 may include a first pin hole 454a, a second pin hole 454b, a third pin hole 454c, and/or a fourth pin hole 454d.

The first pin hole 454a may provide a moving space of a first pin 452a. According to an embodiment, the first pin hole 454a may be connected to a first receiving groove 451a. For example, the first pin hole 454a may be connected to an end 451a-1 of the first receiving groove 451a.

The second pin hole 454b may provide a moving space of the first pin 452a. According to an embodiment, the second pin hole 454b may be connected to the first receiving groove 451a. For example, the second pin hole 454b may be connected to another end 451a-2 of the first receiving groove 451a opposite to the end 451a-1 of the first receiving groove 451a. According to an embodiment, the second pin hole 454b may be spaced apart from the first pin hole 454a. For example, the second pin hole 454b may be spaced apart from the first pin hole 454a in a second direction (e.g., a +x direction).

The third pin hole 454c may provide a moving space of a second pin 452b. According to an embodiment, the third pin hole 454c may be connected to a second receiving groove 451b. For example, the third pin hole 454c may be connected to an end 451b-1 of the second receiving groove 451b.

The fourth pin hole 454d may provide a moving space of the second pin 452b. According to an embodiment, the fourth pin hole 454d may be connected to the second receiving groove 451b. For example, the fourth pin hole 454d may be connected to another end 451b-2 of the second receiving groove 451b opposite to the end 451b-1 of the second receiving groove 451b. According to an embodiment, the fourth pin hole 454d may be spaced apart from the third pin hole 454c. For example, the fourth pin hole 454d may be spaced apart from the third pin hole 454c in a third direction (e.g., a -x direction) opposite to the second direction.

According to an embodiment, the first pin 452a may be movable in the second direction or the third direction opposite to the second direction inside the strap 450. For example, as the first pin 452a moves in the third direction (e.g., the -x direction), an end 452a-1 of the first pin 452a may be disposed within the first pin hole 454a. When the strap 450 and a first frame 430 are coupled, the first pin 452a may move in the third direction. As the first pin 452a moves in the third direction, the end 452a-1 of the first pin 452a may pass through a first through hole 432 of the first frame 430 and then may be disposed within the first pin hole 454a. As the first pin 452a moves in the third direction, the end 452a-1 of the first pin 452a may be disposed outside the second pin hole 454b. As the first pin 452a passes through the first through hole 432, the coupling of the first frame 430 and the strap 450 may be maintained. For example, as the first pin 452a moves in the second direction (e.g., the +x direction), the end 452a-1 of the first pin 452a may be disposed within the second pin hole 454b. When the strap 450 and the first frame 430 are separated, the first pin 452a may move in the second direction (e.g., the +x direction). As the first pin 452a moves in the second direction, the end 452a-1 of the first pin 452a may pass through the first through hole 432, and then may be disposed within the second pin hole 454b. As the first pin 452a moves in the second direction, the end 452a-1 of the first pin 452a may be disposed outside the first pin hole 454a. As the first pin 452a moves in the second direction, the end 452a-1 of the first pin 452a may be disposed outside the first receiving groove 451a. As the first pin 452a is disposed outside the first receiving groove 451a, the strap 450 and the first frame 430 may be separated.

According to an embodiment, the second pin 452b may be movable in the second direction or the third direction opposite to the second direction inside the strap 450. For example, as the second pin 452b moves in the second direction (e.g., +x direction), an end 452b-1 of the second pin 452b may be disposed within the third pin hole 454c. When the strap 450 and a second frame 440 are coupled, the second pin 452b may move in the second direction. As the second pin 452b moves in the second direction, the end 452b-1 of the second pin 452b may pass through the second through hole 442 of the second frame 440, and then may be disposed within the third pin hole 454c. As the second pin 452b moves in the second direction, the end 452b-1 of the second pin 452b may be disposed outside the fourth pin hole 454d. As the second pin 452b passes through the second through hole 442, the coupling between the second frame 440 and the strap 450 may be maintained. For example, as the second pin 452b moves in the third direction (e.g., the -x direction), the end 452b-1 of the second pin 452b may be disposed within the fourth pin hole 454d. When the strap 450 and the second frame 440 are separated, the second pin 452b may move in the third direction. As the second pin 452b moves in the third direction, the end 452b-1 of the second pin 452b may pass through the second through hole 442, and then may be disposed within the fourth pin hole 454d. As the second pin 452b moves in the third direction, the end 452b-1 of the second pin 452b may be disposed outside the third pin hole 454c. As the second pin 452b moves in the third direction, the end 452b-1 of the second pin 452b may be disposed outside the second receiving groove 451b. As the second pin 452b is disposed outside the second receiving groove 451b, the strap 450 and the second frame 440 may be separated.

According to an embodiment, the strap 450 may include at least one opening 455 and at least one contact protrusion 456. The at least one opening 455 may be opened toward the outside of the strap 450. According to an embodiment, the at least one opening 455 may include a first opening 455a and/or a second opening 455b. The first opening 455a may be connected to the second pin hole 454b. The second opening 455b may be connected to the fourth pin hole 454d.

The at least one contact protrusion 456 may receive a driving force in which at least one pin 452 may move. For example, the at least one pin 452 may be movable in the strap 450 by an external force transmitted through the at least one contact protrusion 456. According to an embodiment, the at least one contact protrusion 456 may include a first contact protrusion 456a and/or a second contact protrusion 456b. The first contact protrusion 456a may be connected to the first pin 452a. The first contact protrusion 456a may extend from the first pin 452a. For example, the first contact protrusion 456a may extend in a direction substantially perpendicular to the first pin 452a. At least a portion of the first contact protrusion 456a may be disposed within the first opening 455a. The at least a portion of the first contact protrusion 456a may be exposed to the outside of the strap 450 through the first opening 455a. As the at least a portion of the first contact protrusion 456a is exposed to the outside of the strap 450, a user may move the first pin 452a through the first contact protrusion 456a. The second contact protrusion 456b may be connected to the second pin 452b. The second contact protrusion 456b may extend from the second pin 452b. For example, the second contact protrusion 456b may extend in a direction substantially perpendicular to the second pin 452b. At least a portion of the second contact protrusion 456b may be disposed within the second opening 455b. The at least a portion of the second contact protrusion 456b may be exposed to the outside of the strap 450 through the second opening 455b. As the at least a portion of the second contact protrusion 456b is exposed to the outside of the strap 450, the user may move the second pin 452b through the second contact protrusion 456b.

According to an embodiment, in a state in which the first frame 430 and the strap 450 are coupled, a portion of a side surface 410c of a housing 410 may be spaced apart from the strap 450. In a state in which the second frame 440 and the strap 450 are coupled, the portion of the side surface 410c of the housing 410 may be spaced apart from the strap 450. For example, in a state in which the strap 450 is coupled to the first frame 430 and the second frame 440, the portion of the side surface 410c of the housing 410 spaced apart from the strap 450 may be disposed between the first frame 430 and the second frame 440.

As described above, an electronic device 400 according to an embodiment may provide a structure for easy replacement of the first frame 430 and the second frame 440 by the strap 450 that may be easily coupled or separated from the first frame 430 and the second frame 440.

Hereinafter, a structure of an embodiment will be described based on the first frame 430, but this is for convenience of explanation. A description with respect to the first frame 430 may be substantially equally applied to the second frame 440.

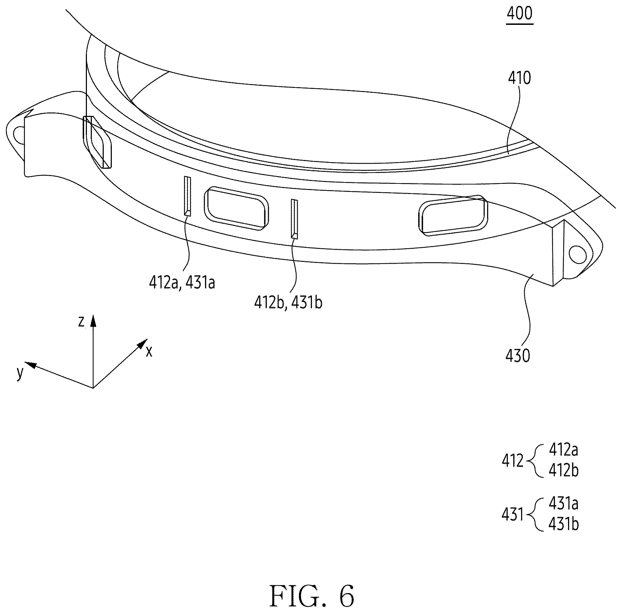

FIG. 6 is a perspective view illustrating a frame and a housing of an exemplary electronic device according to an embodiment.

Referring to FIG. 6, a first coupling portion 412 of a housing 410 may have a linearly extended shape. The first coupling portion 412 may extend in a first direction (e.g., a -z direction). For example, each of a first groove 412a and a second groove 412b of the first coupling portion 412 may have a shape extending in the first direction.

According to an embodiment, a first fastening portion 431 of a first frame 430 may have a linearly extended shape. The first fastening portion 431 may have a shape extending in the first direction (e.g., a -z direction). For example, each of a first protrusion 431a and a second protrusion 431b of the first fastening portion 431 may have a shape extending in the first direction.

As described above, an electronic device 400 according to an embodiment may provide a structure in which a coupling of the first frame 430 and the housing 410 may be stably maintained by the first coupling portion 412 and the first fastening portion 431, which limit movement of the first frame 430 in a direction parallel to the first direction.

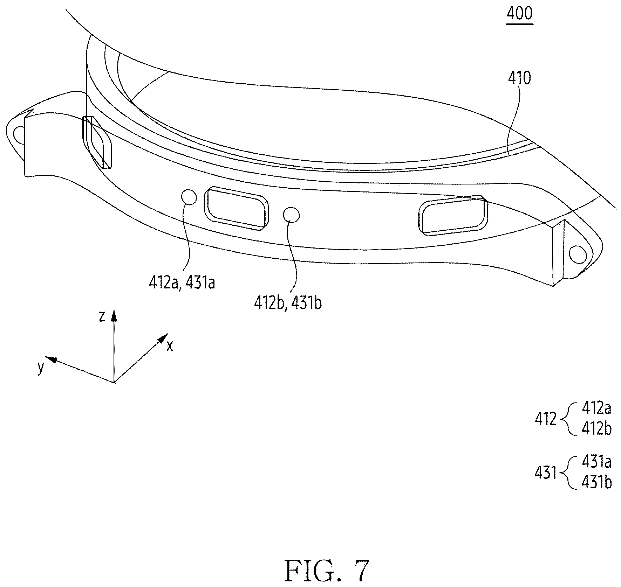

FIG. 7 is a perspective view illustrating a frame and a housing of an exemplary electronic device according to an embodiment.

Referring to FIG. 7, a first coupling portion 412 of a housing 410 according to an embodiment may have a shape that has a curvature and be bent. Each of a first groove 412a and a second groove 412b of a first coupling portion 412 may have the shape that has the curvature and be bent. For example, the first coupling portion 412 may have a circular shape. For example, the first coupling portion 412 may have an elliptical shape. However, it is not limited thereto.

According to an embodiment, a first fastening portion 431 of a first frame 430 may have a shape that has the curvature and be bent. Each of a first protrusion 431a and a second protrusion 431b of the first fastening portion 431 may have the shape that has the curvature and be bent. For example, the first fastening portion 431 may have a circular shape. For example, the first coupling portion 412 may have an elliptical shape. However, it is not limited thereto.

As described above, an electronic device 400 according to an embodiment may provide a structure in which a coupling of the first frame 430 and the housing 410 may be stably maintained by the first coupling portion 412 and the first fastening portion 431, which limit movement of the first frame 430 in a direction parallel to a first direction.

The electronic device may provide various aesthetic experiences to a user through an exterior of the electronic device. For example, the exterior of the electronic device may provide various aesthetic experiences to the user through a color, a shape, and/or a pattern. When a component providing the exterior of the electronic device are not replaceable, the electronic device may not provide various exteriors to the user. When a separate tool is needed to replace the component for providing the exterior of the electronic device, the user may feel uncomfortable. The electronic device may need a structure for easily changing the exterior of the electronic device without the separate tool.

According to an embodiment, an electronic device (e.g., the electronic device 400 of FIG. 4A and FIG. 4B) may comprise a housing including a first surface (e.g., the first surface 410a of FIG. 4A and FIG. 4B), a second surface (e.g., the second surface 410b of FIG. 4A and FIG. 4B) opposite to the first surface and spaced apart from the first surface in a first direction, a side surface (e.g., the side surface 410c of FIG. 4A and FIG. 4B) connecting the first surface and the second surface, and a first coupling portion (e.g., the first coupling portion 412 of FIG. 4A and FIG. 4B) disposed on the side surface. According to an embodiment, the electronic device may comprise a first frame (e.g., the first frame 430 of FIG. 4A and FIG. 4B) including a first through hole (e.g., the first through hole 432 of FIG. 4A and FIG. 4B) and a first fastening portion (e.g., the first fastening portion 431 of FIG. 4A and FIG. 4B) having a shape corresponding to the first coupling portion, the first frame detachably coupled to the side surface. According to an embodiment, the electronic device may comprise a strap (e.g., the strap 450 of FIG. 4A and FIG. 4B) including a first receiving groove (e.g., the first receiving groove 451a of FIG. 4A and FIG. 4B), and a first pin (e.g., the first pin 452a of FIG. 4A and FIG. 4B) that is movable in a second direction perpendicular to the first direction with respect to the first receiving groove and is accommodated in the first through hole, the strap detachably coupled to the first frame. According to an embodiment, the first coupling portion may be coupled to the first fastening portion to limit movement of the first frame in the first direction when the first frame is coupled to the housing. According to an embodiment, the first receiving groove may surround an end of the first frame to limit movement of the first frame in the second direction when the first frame is coupled to the strap.

According to an embodiment, the electronic device may provide a structure capable of reducing a separation between the first frame and the housing by the first coupling portion and the first coupling portion. According to an embodiment, the electronic device may provide a structure in which the first frame and the housing are easily coupled by the first coupling portion and the first coupling portion.

According to an embodiment, the electronic device may comprise at least one first magnet (e.g., the at least on first magnet 460 of FIG. 4A and FIG. 4B) disposed on the side surface. According to an embodiment, the electronic device may comprise at least one second magnet (e.g., the at least on second magnet 470 of FIG. 4A and FIG. 4B), disposed on an inner surface of the first frame, facing the at least one first magnet when the housing and the first frame are coupled.

According to an embodiment, the electronic device may provide a structure in which the first frame and the housing are easily coupled and/or separated by the first magnet disposed within the housing and the second magnet disposed within the first frame.

According to an embodiment, the at least one first magnet may include a plurality of first magnets spaced apart from each other on the side surface. According to an embodiment, the at least one second magnet may include a plurality of second magnets, spaced apart from each other on the inner surface of the first frame, facing the plurality of first magnets respectively when the housing and the first frame are coupled.

According to an embodiment, the electronic device may provide a structure in which the first frame and the housing are easily coupled and/or separated by the plurality of first magnets and the plurality of second magnets capable of interacting with the plurality of first magnets.

According to an embodiment, the first coupling portion may include a first groove (e.g., the first groove 412a of FIG. 4A and FIG. 4B) disposed on the side surface. According to an embodiment, the first coupling portion may include a second groove (e.g., the second groove 412b of FIG. 4A and FIG. 4B) spaced apart from the first groove. According to an embodiment, the at least one first magnet may be disposed between the first groove and the second groove.

According to an embodiment, the electronic device may provide a structure in which the first frame and the housing are easily coupled and/or separated by the first magnet disposed between the first groove and the second groove.

According to an embodiment, the first coupling portion may include at least one groove (e.g., the first groove 412a of FIG. 4A and FIG. 4B) disposed on the side surface. According to an embodiment, the first fastening portion may include at least one protrusion (e.g., the first protrusion 431a of FIG. 4A and FIG. 4B) that protrudes from an inner surface of the first frame facing the side surface, and is accommodated within the at least one groove when the first frame is coupled to the housing.

According to an embodiment, the electronic device may provide a structure in which the first frame and the housing are easily coupled and/or separated by the first coupling portion having a groove form and the first fastening portion having a protrusion form.

According to an embodiment, the strap may include a first pin hole (e.g., the first pin hole 454a of FIG. 5A and FIG. 5B) connected to an end of the first receiving groove. According to an embodiment, the strap may include a second pin hole (e.g., the second pin hole 454b of FIG. 5A and FIG. 5B) connected to another end of the first receiving groove. According to an embodiment, an end of the first pin may be disposed within the first pin hole by passing through the first through hole as the first pin moves in a third direction opposite to the second direction, and disposed within the second pin hole as the first pin moves in the second direction.

According to an embodiment, the electronic device may provide a structure in which the strap and the first frame are easily coupled and/or separated by the first pin movable with respect to the first receiving groove.

According to an embodiment, the strap may include a first elastic member (e.g., the first elastic member 453a of FIG. 4A and FIG. 4B) that presses the first pin in the third direction opposite to the second direction.

According to an embodiment, the electronic device may provide a structure in which the strap and the first frame are easily coupled and/or separated by the first elastic member configured to restore a position of the first pin.

According to an embodiment, the strap may include an opening (e.g., the at least one opening 455 of FIG. 5A and FIG. 5B) that is open toward the outside of the strap. According to an embodiment, the strap may include a contact protrusion (e.g., the contact protrusion 456 of FIG. 5A and FIG. 5B) that extends from the first pin, and is at least partially disposed inside the opening.

According to an embodiment, the electronic device may provide a structure in which the strap and the first frame are easily coupled and/or separated by the contact protrusion exposed through the opening opened toward the outside of the strap.

According to an embodiment, the housing may include a fastening groove (e.g., the fastening groove 411 of FIG. 4A and FIG. 4B), formed by recessing a portion of the side surface inwardly, having a shape corresponding to a portion of the first frame.

According to an embodiment, the electronic device may provide a structure in which the housing and the first frame are easily coupled and/or separated by the fastening groove having the shape corresponding to the shape of the first frame.

According to an embodiment, a portion of the side surface may be spaced apart from the strap in a state when the first frame and the strap are coupled.

According to an embodiment, since the portion of the side surface of the housing is spaced apart from the strap, the electronic device may provide a structure in which the strap is movable.

According to an embodiment, the strap may be rotatable with respect to the first frame based on the first pin in a state when coupled to the first frame.

According to an embodiment, the electronic device may provide a structure that may be easily worn by a user, by the strap rotatable with respect to the first frame.

According to an embodiment, the electronic device may comprise a display (e.g., the display 420 of FIG. 4A and FIG. 4B) disposed on the first surface. According to an embodiment, when the electronic device is worn by a user, the second surface may face a portion of a body of the user.

According to an embodiment, the electronic device may provide a structure in which the user may conveniently carry by being worn by the user.

According to an embodiment, the electronic device may comprise a second frame (e.g., the second frame 440 of FIG. 4A and FIG. 4B), including a second through hole, spaced apart from the first frame, and detachably coupled to the side surface. According to an embodiment, the housing may include a second coupling portion (e.g., the second coupling portion 413 of FIG. 4A and FIG. 4B), disposed on the side surface, spaced apart from the first coupling portion. According to an embodiment, the strap may include a second receiving groove, and a second pin (e.g., the second pin 452b of FIG. 4A and FIG. 4B) that is movable in a third direction opposite to the second direction with respect to the second receiving groove and is accommodated within the second through hole. According to an embodiment, the second frame may include a second fastening portion (e.g., the second fastening portion 441 of FIG. 4A and FIG. 4B) that has a shape corresponding to the second coupling portion and is configured to limit movement of the second frame in the first direction when the second frame is coupled to the housing. According to an embodiment, the second receiving groove may surround an end of the second frame to limit movement of the second frame in the second direction when the second frame is coupled to the strap.

According to an embodiment, the electronic device may provide a structure capable of reducing a separation between the second frame and the housing by the second coupling portion and the second fastening portion. According to an embodiment, the electronic device may provide a structure in which the second frame and the housing are easily coupled by the second coupling portion and the second fastening portion.

According to an embodiment, the strap may include a second elastic member (e.g., the second elastic member 453b of FIG. 4A and FIG. 4B) that presses the second pin in the second direction.

According to an embodiment, the electronic device may provide a structure in which the strap and the second frame are easily separated and/or coupled by the second elastic member for restoring a position of the second pin.

According to an embodiment, the strap may include a third pin hole (e.g., the third pin hole 454c of FIG. 5A and FIG. 5B) facing an end of the second receiving groove. According to an embodiment, the strap may include a fourth pin hole (e.g., the fourth pin hole 454d of FIG. 5A and FIG. 5B) facing another end of the second receiving groove. According to an embodiment, an end of the second pin may be disposed within the third pin hole by passing through the second through hole as the second pin moves in the third direction, and disposed within the fourth pin hole as the second pin moves in the second direction.

According to an embodiment, the electronic device may provide a structure in which the strap and the second frame are easily coupled and/or separated by the second pin movable with respect to the second receiving groove.

According to an embodiment, an electronic device (e.g., the electronic device 400 of FIG. 4A and FIG. 4B) may comprise a housing including a first surface (e.g., the first surface 410a of FIG. 4A and FIG. 4B), a second surface (e.g., the second surface 410b of FIG. 4A and FIG. 4B) opposite to the first surface and spaced apart from the first surface in a first direction, a side surface (e.g., the side surface 410c of FIG. 4A and FIG. 4B) extending from the first surface to the second surface, and a first coupling portion (e.g., the first coupling portion 412 of FIG. 4A and FIG. 4B) disposed on the side surface. According to an embodiment, the electronic device may comprise a first magnet (e.g., the at least on first magnet 460 of FIG. 4A and FIG. 4B) disposed on the side surface of the housing. According to an embodiment, the electronic device may comprise a first frame (e.g., the first frame 430 of FIG. 4A and FIG. 4B) including a first through hole (e.g., the first through hole 432 of FIG. 4A and FIG. 4B) and a first fastening portion (e.g., the first fastening portion 431 of FIG. 4A and FIG. 4B) having a shape corresponding to the first coupling portion, the first frame detachably coupled to the side surface. According to an embodiment, the electronic device may comprise a second magnet (e.g., the at least on second magnet 470 of FIG. 4A and FIG. 4B) coupled to the first frame, and in contact with the first magnet when the housing and the first frame are coupled. According to an embodiment, the electronic device may comprise a strap (e.g., the strap 450 of FIG. 4A and FIG. 4B) including a first receiving groove (e.g., the first receiving groove 451a of FIG. 4A and FIG. 4B), and a first pin (e.g., the first pin 452a of FIG. 4A and FIG. 4B) that is movable in a second direction perpendicular to the first direction with respect to the first receiving groove and is accommodated within the first through hole, the strap detachably coupled to the first frame. According to an embodiment, the first coupling portion may be coupled to the first fastening portion to limit movement of the first frame in the first direction when the first frame is coupled to the housing. According to an embodiment, the first receiving groove may surround an end of the first frame to limit movement of the first frame in the second direction when the first frame is coupled to the strap.

According to an embodiment, the electronic device may provide a structure capable of reducing a separation between the first frame and the housing by the first coupling portion and the first fastening portion. According to an embodiment, the electronic device may provide a structure in which the first frame and the housing are easily coupled by the first coupling portion and the first fastening portion.

According to an embodiment, the first coupling portion may include at least one groove (e.g., the first groove 412a of FIG. 4A and FIG. 4B) disposed on the side surface. According to an embodiment, the first fastening portion may include at least one protrusion (e.g., the first protrusion 431a of FIG. 4A and FIG. 4B) that protrudes from an inner surface of the first frame facing the side surface, and is accommodated within the at least one groove when the first frame is coupled to the housing.

According to an embodiment, the electronic device may provide a structure in which the first frame and the housing are easily coupled and/or separated by the first coupling portion having a groove form and the first fastening portion having a protrusion form.

According to an embodiment, the strap may include a first pin hole (e.g., the first pin hole 454a of FIG. 5A and FIG. 5B) connected to an end of the first receiving groove. According to an embodiment, the strap may include a second pin hole (e.g., the second pin hole 454b of FIG. 5A and FIG. 5B) connected to another end of the first receiving groove. According to an embodiment, an end of the first pin may be disposed within the first pin hole by passing through the first through hole as the first pin moves in a third direction opposite to the second direction, and disposed within the second pin hole as the first pin moves in the second direction.

According to an embodiment, the electronic device may provide a structure in which the strap and the first frame are easily coupled and/or separated by the first pin movable with respect to the first receiving groove.

According to an embodiment, the strap may comprise a first elastic member (e.g., the first elastic member 453a of FIG. 4A and FIG. 4B) that presses the first pin in the third direction opposite to the second direction.

According to an embodiment, the electronic device may provide a structure in which the strap and the first frame are easily coupled and/or separated by the first elastic member configured to restore a position of the first pin.

According to an embodiment, the strap may include an opening (e.g., the at least one opening 455 of FIG. 5A and FIG. 5B) that is open toward the outside of the strap. According to an embodiment, the strap may include a contact protrusion (e.g., the contact protrusion 456 of FIG. 5A and FIG. 5B), extending from the first pin, at least partially disposed inside the opening.

According to an embodiment, the electronic device may provide a structure in which the strap and the first frame are easily coupled and/or separated by the contact protrusion exposed through the opening open toward the outside of the strap.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspects (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration.

## Claims

1. An electronic device (101; 200; 400) comprising:
a housing (410) including:
a first surface (410a),
a second surface (410b) opposite to the first surface (410a) and spaced apart from the first surface (410a) in a first direction, and
a side surface (410c) connecting the first surface (410a) and the second surface (410b), and comprising a first coupling portion (412);
a first frame (430) including a first through hole (432) and a first fastening portion (431) having a shape corresponding to the first coupling portion (412), the first frame (430) detachably coupled to the side surface (410c); and
a strap (450) including a first receiving groove (451a), and a first pin (452a) that is movable in a second direction perpendicular to the first direction with respect to the first receiving groove (451a) and is accommodated in the first through hole (432), the strap (450) detachably coupled to the first frame (430), and
wherein the first coupling portion (412) is coupled to the first fastening portion (431) such that a coupling between the first frame (430) and the housing (410) is maintained, and
wherein the first receiving groove (451a) surrounds an end of the first frame (430) such that a coupling between the first frame (430) and the strap (450) is maintained.

2. The electronic device (101; 200; 400) of claim 1, further comprising:
at least one first magnet (460) disposed on the side surface (410c); and
at least one second magnet (470), disposed on an inner surface of the first frame (430), facing the at least one first magnet (460) when the housing (410) and the first frame (430) are coupled.

3. The electronic device (101; 200; 400) of claim 2,
wherein the at least one first magnet (460) includes a plurality of first magnets spaced apart from each other on the side surface (410c), and
wherein the at least one second magnet (470) includes a plurality of second magnets, spaced apart from each other on the inner surface of the first frame (430), facing the plurality of first magnets respectively when the housing (410) and the first frame (430) are coupled.

4. The electronic device (101; 200; 400) of any one of claims 2 or 3,
wherein the first coupling portion (412) includes:
a first groove (412a) disposed on the side surface (410c); and
a second groove (412b) spaced apart from the first groove (412a), and
wherein the at least one first magnet (460) is disposed between the first groove (412a) and the second groove (412b).

5. The electronic device (101; 200; 400) of any one of claims 1 to 4,
wherein the first coupling portion (412) includes at least one groove disposed on the side surface (410c), and
wherein the first fastening portion (431) includes at least one protrusion that protrudes from an inner surface of the first frame (430) facing the side surface (410c), and is accommodated within the at least one groove when the first frame (430) is coupled to the housing (410).

6. The electronic device (101; 200; 400) of any one of claims 1 to 5,
wherein the strap (450) further includes:
a first pin hole (454a) connected to an end of the first receiving groove (451a); and
a second pin hole (454b) connected to another end of the first receiving groove (451a), and
wherein an end of the first pin (452a) is:
disposed within the first pin hole (454a) by passing through the first through hole (432) as the first pin (452a) moves in a third direction opposite to the second direction; and
disposed within the second pin hole (454b) as the first pin (452a) moves in the second direction.

7. The electronic device (101; 200; 400) of any one of claims 1 to 6,
wherein the strap (450) further includes a first elastic member (453a) that presses the first pin (452a) in the third direction opposite to the second direction.

8. The electronic device (101; 200; 400) of any one of claims 1 to 7,
wherein the strap (450) further includes:
an opening (455) that is open toward an outside of the strap (450); and
a contact protrusion (456) that extends from the first pin (452a), and is at least partially disposed inside the opening.

9. The electronic device (101; 200; 400) of any one of claims 1 to 8,
wherein the housing (410) further includes a fastening groove (411), formed by recessing a portion of the side surface (410c) inwardly, having a shape corresponding to a portion of the first frame (430).

10. The electronic device (101; 200; 400) of any one of claims 1 to 9,
wherein a portion of the side surface (410c) is spaced apart from the strap (450) in a state where the first frame (430) and the strap (450) are coupled.

11. The electronic device (101; 200; 400) of any one of claims 1 to 10,
wherein the strap (450) is rotatable with respect to the first frame (430) based on the first pin (452a) in a state when coupled to the first frame (430).

12. The electronic device (101; 200; 400) of any one of claims 1 to 11, further comprising a display (420) disposed on the first surface (410a), and
wherein, when the electronic device (101; 200; 400) is worn by a user, the second surface (410b) faces a portion of a body of the user.

13. The electronic device (101; 200; 400) of any one of claims 1 to 12, further comprising:
a second frame (440), including a second through hole (442), spaced apart from the first frame (430), and detachably coupled to the side surface (410c), and
wherein the side surface of the housing (410) further comprises a second coupling portion (413), spaced apart from the first coupling portion (412),
wherein the strap (450) includes a second receiving groove (451b), and a second pin (452b) that is movable in a third direction opposite to the second direction with respect to the second receiving groove (451b) and is accommodated within the second through hole (442),
wherein the second frame (440) includes a second fastening portion (441) that has a shape corresponding to the second coupling portion (413) and is configured to limit movement of the second frame (440) in the first direction when the second frame (440) is coupled to the housing (410), and
wherein the second receiving groove (451b) surrounds an end of the second frame (440) to limit movement of the second frame (440) in the second direction when the second frame (440) is coupled to the strap (450).

14. The electronic device (101; 200; 400) of claim 13,
wherein the strap (450) further includes a second elastic member (453b) that presses the second pin (452b) in the second direction.

15. The electronic device (101; 200; 400) of any one of claims 13 and 14,
wherein the strap (450) further includes:
a third pin hole (454c) facing an end of the second receiving groove (451b); and
a fourth pin hole (454d) facing another end of the second receiving groove (451b), and
wherein an end of the second pin (452b) is:
disposed within the third pin hole (454c) by passing through the second through hole (442) as the second pin (452b) moves in the third direction; and
disposed within the fourth pin hole (454d) as the second pin (452b) moves in the second direction.

## Patentansprüche

1. Elektronische Vorrichtung (101; 200; 400), die Folgendes umfasst:
ein Gehäuse (410), das Folgendes beinhaltet:
eine erste Fläche (410a),
eine zweite Fläche (410b), die der ersten Fläche (410a) gegenüberliegt und in einer ersten Richtung von der ersten Fläche (410a) beabstandet ist, und
eine Seitenfläche (410c), die die erste Fläche (410a) und die zweite Fläche (410b) verbindet und einen ersten Kopplungsabschnitt (412) umfasst;
einen ersten Rahmen (430), der ein erstes Durchgangsloch (432) und einen ersten Befestigungsabschnitt (431) mit einer dem ersten Kopplungsabschnitt (412) entsprechenden Form beinhaltet, wobei der erste Rahmen (430) lösbar mit der Seitenfläche (410c) gekoppelt ist; und
einen Riemen (450), der eine erste Aufnahmenut (451a) und einen ersten Stift (452a) beinhaltet, der in einer zweiten Richtung senkrecht zur ersten Richtung in Bezug auf die erste Aufnahmenut (451a) beweglich ist und im ersten Durchgangsloch (432) aufgenommen ist, wobei der Riemen (450) lösbar mit dem ersten Rahmen (430) gekoppelt ist, und
wobei der erste Kopplungsabschnitt (412) so mit dem ersten Befestigungsabschnitt (431) gekoppelt ist, dass eine Kopplung zwischen dem ersten Rahmen (430) und dem Gehäuse (410) aufrechterhalten wird, und
wobei die erste Aufnahmenut (451a) ein Ende des ersten Rahmens (430) so umgibt, dass eine Kopplung zwischen dem ersten Rahmen (430) und dem Riemen (450) aufrechterhalten wird.

2. Elektronische Vorrichtung (101; 200; 400) nach Anspruch 1, ferner umfassend:
mindestens einen ersten Magneten (460), der an der Seitenfläche (410c) angeordnet ist; und
mindestens einen zweiten Magneten (470), der an einer Innenfläche des ersten Rahmens (430) angeordnet ist und dem mindestens einen ersten Magneten (460) zugewandt ist, wenn das Gehäuse (410) und der erste Rahmen (430) gekoppelt sind.

3. Elektronische Vorrichtung (101; 200; 400) nach Anspruch 2,
wobei der mindestens eine erste Magnet (460) eine Vielzahl von ersten Magneten beinhaltet, die an der Seitenfläche (410c) voneinander beabstandet sind, und
wobei der mindestens eine zweite Magnet (470) eine Vielzahl von zweiten Magneten beinhaltet, die an der Innenfläche des ersten Rahmens (430) voneinander beabstandet sind und jeweils der Vielzahl von ersten Magneten zugewandt sind, wenn das Gehäuse (410) und der erste Rahmen (430) gekoppelt sind.

4. Elektronische Vorrichtung (101; 200; 400) nach einem der Ansprüche 2 oder 3,
wobei der erste Kopplungsabschnitt (412) Folgendes beinhaltet:
eine erste Nut (412a), die an der Seitenfläche (410c) angeordnet ist; und
eine zweite Nut (412b), die von der ersten Nut (412a) beabstandet ist, und
wobei der mindestens eine erste Magnet (460) zwischen der ersten Nut (412a) und der zweiten Nut (412b) angeordnet ist.

5. Elektronische Vorrichtung (101; 200; 400) nach einem der Ansprüche 1 bis 4,
wobei der erste Kopplungsabschnitt (412) mindestens eine Nut beinhaltet, die an der Seitenfläche (410c) angeordnet ist, und
wobei der erste Befestigungsabschnitt (431) mindestens einen Vorsprung beinhaltet, der von einer der Seitenfläche (410c) zugewandten Innenfläche des ersten Rahmens (430) vorsteht und innerhalb der mindestens einen Nut aufgenommen ist, wenn der erste Rahmen (430) mit dem Gehäuse (410) gekoppelt ist.

6. Elektronische Vorrichtung (101; 200; 400) nach einem der Ansprüche 1 bis 5,
wobei der Riemen (450) ferner Folgendes beinhaltet:
ein erstes Stiftloch (454a), das mit einem Ende der ersten Aufnahmenut (451a) verbunden ist; und
ein zweites Stiftloch (454b), das mit einem anderen Ende der ersten Aufnahmenut (451a) verbunden ist, und
wobei ein Ende des ersten Stifts (452a):
innerhalb des ersten Stiftlochs (454a) angeordnet ist, indem es durch das erste Durchgangsloch (432) hindurchgeht, wenn sich der erste Stift (452a) in einer dritten Richtung entgegengesetzt zur zweiten Richtung bewegt; und
innerhalb des zweiten Stiftlochs (454b) angeordnet ist, wenn sich der erste Stift (452a) in der zweiten Richtung bewegt.

7. Elektronische Vorrichtung (101; 200; 400) nach einem der Ansprüche 1 bis 6,
wobei der Riemen (450) ferner ein erstes elastisches Element (453a) beinhaltet, das den ersten Stift (452a) in die dritte Richtung entgegengesetzt zur zweiten Richtung drückt.

8. Elektronische Vorrichtung (101; 200; 400) nach einem der Ansprüche 1 bis 7,
wobei der Riemen (450) ferner Folgendes beinhaltet:
eine Öffnung (455), die zu einer Außenseite des Riemens (450) hin offen ist; und
einen Kontaktvorsprung (456), der sich von dem ersten Stift (452a) erstreckt und zumindest teilweise innerhalb der Öffnung angeordnet ist.

9. Elektronische Vorrichtung (101; 200; 400) nach einem der Ansprüche 1 bis 8,
wobei das Gehäuse (410) ferner eine Befestigungsnut (411) beinhaltet, die durch Vertiefen eines Abschnitts der Seitenfläche (410c) nach innen ausgebildet ist und eine Form aufweist, die einem Abschnitt des ersten Rahmens (430) entspricht.

10. Elektronische Vorrichtung (101; 200; 400) nach einem der Ansprüche 1 bis 9,
wobei ein Abschnitt der Seitenfläche (410c) in einem Zustand, in dem der erste Rahmen (430) und der Riemen (450) gekoppelt sind, von dem Riemen (450) beabstandet ist.

11. Elektronische Vorrichtung (101; 200; 400) nach einem der Ansprüche 1 bis 10,
wobei der Riemen (450) in einem Zustand, in dem er mit dem ersten Rahmen (430) gekoppelt ist, basierend auf dem ersten Stift (452a) in Bezug auf den ersten Rahmen (430) drehbar ist.

12. Elektronische Vorrichtung (101; 200; 400) nach einem der Ansprüche 1 bis 11, ferner umfassend eine Anzeige (420), die an der ersten Fläche (410a) angeordnet ist, und
wobei, wenn die elektronische Vorrichtung (101; 200; 400) von einem Benutzer getragen wird, die zweite Fläche (410b) einem Abschnitt eines Körpers des Benutzers zugewandt ist.

13. Elektronische Vorrichtung (101; 200; 400) nach einem der Ansprüche 1 bis 12, ferner umfassend:
einen zweiten Rahmen (440), der ein zweites Durchgangsloch (442) beinhaltet, von dem ersten Rahmen (430) beabstandet ist und lösbar mit der Seitenfläche (410c) gekoppelt ist, und
wobei die Seitenfläche des Gehäuses (410) ferner einen zweiten Kopplungsabschnitt (413) umfasst, der vom ersten Kopplungsabschnitt (412) beabstandet ist,
wobei der Riemen (450) eine zweite Aufnahmenut (451b) und einen zweiten Stift (452b) beinhaltet, der in einer dritten Richtung entgegengesetzt zur zweiten Richtung in Bezug auf die zweite Aufnahmenut (451b) beweglich ist und innerhalb des zweiten Durchgangslochs (442) aufgenommen ist,
wobei der zweite Rahmen (440) einen zweiten Befestigungsabschnitt (441) beinhaltet, der eine dem zweiten Kopplungsabschnitt (413) entsprechende Form aufweist und dazu konfiguriert ist, eine Bewegung des zweiten Rahmens (440) in der ersten Richtung zu begrenzen, wenn der zweite Rahmen (440) mit dem Gehäuse (410) gekoppelt ist, und
wobei die zweite Aufnahmenut (451b) ein Ende des zweiten Rahmens (440) umgibt, um eine Bewegung des zweiten Rahmens (440) in der zweiten Richtung zu begrenzen, wenn der zweite Rahmen (440) mit dem Riemen (450) gekoppelt ist.

14. Elektronische Vorrichtung (101; 200; 400) nach Anspruch 13,
wobei der Riemen (450) ferner ein zweites elastisches Element (453b) beinhaltet, das den zweiten Stift (452b) in die zweite Richtung drückt.

15. Elektronische Vorrichtung (101; 200; 400) nach einem der Ansprüche 13 und 14,
wobei der Riemen (450) ferner Folgendes beinhaltet:
ein drittes Stiftloch (454c), das einem Ende der zweiten Aufnahmenut (451b) zugewandt ist; und
ein viertes Stiftloch (454d), das einem anderen Ende der zweiten Aufnahmenut (451b) zugewandt ist, und
wobei ein Ende des zweiten Stifts (452b):
innerhalb des dritten Stiftlochs (454c) angeordnet ist, indem es durch das zweite Durchgangsloch (442) hindurchgeht, wenn sich der zweite Stift (452b) in der dritten Richtung bewegt; und
innerhalb des vierten Stiftlochs (454d) angeordnet ist, wenn sich der zweite Stift (452b) in der zweiten Richtung bewegt.

## Revendications

1. Dispositif électronique (101 ; 200 ; 400) comprenant :
un boîtier (410) comprenant :
une première surface (410a),
une deuxième surface (410b) opposée à la première surface (410a) et espacée de la première surface (410a) dans une première direction, et
une surface latérale (410c) reliant la première surface (410a) et la deuxième surface (410b), et comprenant une première partie de couplage (412) ;
un premier cadre (430) comprenant un premier trou traversant (432) et une première partie de fixation (431) ayant une forme correspondant à la première partie de couplage (412), le premier cadre (430) étant couplé de manière amovible à la surface latérale (410c) ; et
une sangle (450) comprenant une première rainure de réception (451a) et une première goupille (452a) qui est mobile dans une deuxième direction perpendiculaire à la première direction par rapport à la première rainure de réception (451a) et qui est logée dans le premier trou traversant (432), la sangle (450) étant couplée de manière amovible au premier cadre (430), et
dans lequel la première partie de couplage (412) est couplée à la première partie de fixation (431) de sorte qu'un couplage entre le premier cadre (430) et le boîtier (410) est maintenu, et
dans lequel la première rainure de réception (451a) entoure une extrémité du premier cadre (430) de sorte qu'un couplage entre le premier cadre (430) et la sangle (450) est maintenu.

2. Dispositif électronique (101 ; 200 ; 400) de la revendication 1, comprenant en outre :
au moins un premier aimant (460) disposé sur la surface latérale (410c) ; et
au moins un deuxième aimant (470), disposé sur une surface intérieure du premier cadre (430), faisant face à l'au moins un premier aimant (460) lorsque le boîtier (410) et le premier cadre (430) sont couplés.

3. Dispositif électronique (101 ; 200 ; 400) de la revendication 2,
dans lequel l'au moins un premier aimant (460) comprend une pluralité de premiers aimants espacés les uns des autres sur la surface latérale (410c), et
dans lequel l'au moins un deuxième aimant (470) comprend une pluralité de deuxièmes aimants, espacés les uns des autres sur la surface intérieure du premier cadre (430), faisant face respectivement à la pluralité de premiers aimants lorsque le boîtier (410) et le premier cadre (430) sont couplés.

4. Dispositif électronique (101 ; 200 ; 400) de l'une quelconque des revendications 2 ou 3,
dans lequel la première partie de couplage (412) comprend :
une première rainure (412a) disposée sur la surface latérale (410c) ; et
une deuxième rainure (412b) espacée de la première rainure (412a), et
dans lequel l'au moins un premier aimant (460) est disposé entre la première rainure (412a) et la deuxième rainure (412b).

5. Dispositif électronique (101 ; 200 ; 400) de l'une quelconque des revendications 1 à 4,
dans lequel la première partie de couplage (412) comprend au moins une rainure disposée sur la surface latérale (410c), et
dans lequel la première partie de fixation (431) comprend au moins une saillie qui fait saillie à partir d'une surface intérieure du premier cadre (430) faisant face à la surface latérale (410c), et qui est logée dans l'au moins une rainure lorsque le premier cadre (430) est couplé au boîtier (410).

6. Dispositif électronique (101 ; 200 ; 400) de l'une quelconque des revendications 1 à 5,
dans lequel la sangle (450) comprend en outre :
un premier trou de goupille (454a) relié à une extrémité de la première rainure de réception (451a) ; et
un deuxième trou de goupille (454b) relié à une autre extrémité de la première rainure de réception (451a), et
dans lequel une extrémité de la première goupille (452a) est :
disposée à l'intérieur du premier trou de goupille (454a) en passant à travers le premier trou traversant (432) lorsque la première goupille (452a) se déplace dans une troisième direction opposée à la deuxième direction ; et
disposée à l'intérieur du deuxième trou de goupille (454b) lorsque la première goupille (452a) se déplace dans la deuxième direction.

7. Dispositif électronique (101 ; 200 ; 400) de l'une quelconque des revendications 1 à 6,
dans lequel la sangle (450) comprend en outre un premier élément élastique (453a) qui presse la première goupille (452a) dans la troisième direction opposée à la deuxième direction.

8. Dispositif électronique (101 ; 200 ; 400) de l'une quelconque des revendications 1 à 7,
dans lequel la sangle (450) comprend en outre :
une ouverture (455) qui est ouverte vers un extérieur de la sangle (450) ; et
une saillie de contact (456) qui s'étend à partir de la première goupille (452a) et qui est au moins partiellement disposée à l'intérieur de l'ouverture.

9. Dispositif électronique (101 ; 200 ; 400) de l'une quelconque des revendications 1 à 8,
dans lequel le boîtier (410) comprend en outre une rainure de fixation (411), formée par évidement vers l'intérieur d'une partie de la surface latérale (410c), ayant une forme correspondant à une partie du premier cadre (430).

10. Dispositif électronique (101 ; 200 ; 400) de l'une quelconque des revendications 1 à 9,
dans lequel une partie de la surface latérale (410c) est espacée de la sangle (450) dans un état où le premier cadre (430) et la sangle (450) sont couplés.

11. Dispositif électronique (101 ; 200 ; 400) de l'une quelconque des revendications 1 à 10,
dans lequel la sangle (450) peut tourner par rapport au premier cadre (430) sur la base de la première goupille (452a) dans un état où elle est couplée au premier cadre (430).

12. Dispositif électronique (101 ; 200 ; 400) de l'une quelconque des revendications 1 à 11, comprenant en outre un affichage (420) disposé sur la première surface (410a), et
dans lequel, lorsque le dispositif électronique (101 ; 200 ; 400) est porté par un utilisateur, la deuxième surface (410b) fait face à une partie d'un corps de l'utilisateur.

13. Dispositif électronique (101 ; 200 ; 400) de l'une quelconque des revendications 1 à 12, comprenant en outre :
un deuxième cadre (440), comprenant un deuxième trou traversant (442), espacé du premier cadre (430) et couplé de manière amovible à la surface latérale (410c), et
dans lequel la surface latérale du boîtier (410) comprend en outre une deuxième partie de couplage (413), espacée de la première partie de couplage (412),
dans lequel la sangle (450) comprend une deuxième rainure de réception (451b) et une deuxième goupille (452b) qui est mobile dans une troisième direction opposée à la deuxième direction par rapport à la deuxième rainure de réception (451b) et qui est logée à l'intérieur du deuxième trou traversant (442),
dans lequel le deuxième cadre (440) comprend une deuxième partie de fixation (441) qui a une forme correspondant à la deuxième partie de couplage (413) et qui est configurée pour limiter un déplacement du deuxième cadre (440) dans la première direction lorsque le deuxième cadre (440) est couplé au boîtier (410), et
dans lequel la deuxième rainure de réception (451b) entoure une extrémité du deuxième cadre (440) pour limiter un déplacement du deuxième cadre (440) dans la deuxième direction lorsque le deuxième cadre (440) est couplé à la sangle (450).

14. Dispositif électronique (101 ; 200 ; 400) de la revendication 13,
dans lequel la sangle (450) comprend en outre un deuxième élément élastique (453b) qui presse la deuxième goupille (452b) dans la deuxième direction.

15. Dispositif électronique (101 ; 200 ; 400) de l'une quelconque des revendications 13 et 14,
dans lequel la sangle (450) comprend en outre :
un troisième trou de goupille (454c) faisant face à une extrémité de la deuxième rainure de réception (451b) ; et
un quatrième trou de goupille (454d) faisant face à une autre extrémité de la deuxième rainure de réception (451b), et
dans lequel une extrémité de la deuxième goupille (452b) est :
disposée à l'intérieur du troisième trou de goupille (454c) en passant à travers le deuxième trou traversant (442) lorsque la deuxième goupille (452b) se déplace dans la troisième direction ; et
disposée à l'intérieur du quatrième trou de goupille (454d) lorsque la deuxième goupille (452b) se déplace dans la deuxième direction.
